(19) **Europäisches Patentamt / European Patent Office / Office européen des brevets**

(11) **EP 4 765 552 A1**

(12) **EUROPEAN PATENT APPLICATION**
published in accordance with Art. 153(4) EPC

(43) Date of publication:
**24.06.2026 Bulletin 2026/26**

(21) Application number: **24872116.9**

(22) Date of filing: **20.09.2024**

(51) International Patent Classification (IPC):
**H02J 3/46** *(2026.01)*       **H02J 3/00** *(2026.01)*
**H02J 3/32** *(2026.01)*       **H02J 3/38** *(2026.01)*
**H02J 7/35** *(2006.01)*

(52) Cooperative Patent Classification (CPC):
**H02J 3/00; H02J 3/32; H02J 3/38; H02J 3/46; H02J 7/35**

(86) International application number:
**PCT/JP2024/033772**

(87) International publication number:
**WO 2025/070325 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023   JP 2023170423**

(71) Applicant: **Panasonic Intellectual Property Management Co., Ltd.**
**Kadoma-shi, Osaka 571-0057 (JP)**

(72) Inventor: **IMOTO, Junichi**
**Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **CONTROL METHOD, CONTROL DEVICE, AND PROGRAM**

(57)    A control device that controls supply of power to a load acquires a lower limit value as a confidence interval of a prediction value for power demand by the load, acquires an upper limit value as a confidence interval of a prediction value for solar power generation by a solar cell, plans an output of at least one battery of a fuel cell or a storage battery that supplies power corresponding to a difference between the lower limit value and the upper limit value to the load, and controls an output of the at least one battery according to the plan.

## FIG.2

```
              START
                |
                |  ┌──── S11
ACQUIRE LOWER LIMIT PREDICTION VALUE FOR POWER DEMAND
                |
                |  ┌──── S12
ACQUIRE UPPER LIMIT PREDICTION VALUE FOR SOLAR POWER GENERATION
                |
                |  ┌──── S13
     PLAN POWER SUPPLY TO LOAD
                |
                |  ┌──── S14
CONTROL OUTPUT OF EACH BATTERY ACCORDING TO PLAN
                |
               END
```

EP 4 765 552 A1

## Description

### Technical Field

The present disclosure relates to a technique of controlling power supply from a battery to a load.

### Background Art

In recent years, in order to realize self-sufficiency of power in a facility such as a factory, a technique of controlling power supply from a power generation device such as a solar cell and a fuel cell and a storage battery to a load in the facility is known. In this technique, control (hereinafter, multiple battery control) is performed in which the difference between power demand by a load and the amount of power generation by a power generation device is offset by charging and discharging of a storage battery.

Supply of power to the power system (hereinafter, reverse power flow) may be prohibited by system interconnection regulations. Therefore, in the multiple battery control, it is necessary to suppress the amount of power generation in order to avoid the occurrence of reverse power flow, but it is also required to avoid excessive suppression at the same time. For example, Patent Literature 1 describes that a margin is added to a prediction value for power demand, and an upper limit value of the amount of power generation is set on the basis of the prediction value for the power demand, the margin, and a prediction value for the amount of power generation by a renewable energy power generation facility.

However, Patent Literature 1 does not consider providing a margin to a prediction value for the amount of power generation by the renewable energy power generation facility. Therefore, when the prediction value for the amount of power generation by the solar cell is smaller than the amount of actual power generation, there is a possibility that the upper limit value of the amount of power generation by the solar cell is set larger than the upper limit value that should be originally set. In this case, there is a possibility that the amount of power generation by the solar cell is not suppressed and the reverse power flow occurs.

### Citation List

### Patent Literature

Patent Literature 1: JP 2022-25698 A

### Summary of Invention

The present disclosure has been made to solve such a problem, and an object of the present disclosure is to provide a technique capable of implementing power supply from a battery to a load in which a reverse power flow does not occur.

### Problems to be Solved by the Invention

A control method in one aspect of the present disclosure is a control method in a control device that controls supply of power to a load, the control method including acquiring a lower limit value as a confidence interval of a prediction value for power demand by the load, acquiring an upper limit value as a confidence interval of a prediction value for solar power generation by a solar cell, planning an output of at least one battery of a fuel cell or a storage battery that supplies power corresponding to a difference between the lower limit value and the upper limit value to the load, and controlling an output of the at least one battery according to the plan.

### Brief Description of Drawings

FIG. 1 is a diagram illustrating an example of a configuration of a control system.
FIG. 2 is a flowchart illustrating an example of processing performed by a control device.
FIG. 3 is a flowchart illustrating an example of processing of acquiring a lower limit value as a confidence interval of a prediction value for a power demand.
FIG. 4 is a flowchart illustrating an example of processing of acquiring an upper limit value as a confidence interval of a prediction value for solar power generation.
FIG. 5 is a diagram illustrating an example of a plan prepared by a planning unit.

FIG. 6 is a flowchart illustrating another example of processing of acquiring a lower limit value as a confidence interval of a prediction value for a power demand.

FIG. 7 is a flowchart illustrating another example of processing of acquiring an upper limit value as a confidence interval of a prediction value for solar power generation.

**Description of Embodiments**

(Knowledge underlying present disclosure)

As described above, in recent years, in order to realize self-sufficiency of power in a facility such as a factory, multiple battery control has been performed in which the difference between power demand by a load and the amount of power generation by a power generation device such as a solar cell and a fuel cell is offset by charging and discharging of a storage battery.

However, it is difficult to accurately predict the power demand by the load and the power to be generated by the solar cell (hereinafter, it is abbreviated as solar power generation). In addition, in general, before a battery is instructed to output power and the power is output, a control delay occurs due to generation and input and output of a control signal instructing to output the power, a rise until the instructed power is output, and the like.

For this reason, in the multiple battery control, a balance between power demand and power supply may not be maintained in real time. In this case, power purchase from the power system and reverse power flow, which is power supply to the power system, may occur. Since the reverse power flow may be prohibited by the system interconnection regulations, in the multiple battery control, it is necessary to suppress solar power generation in order to avoid the reverse power flow. In the multiple battery control using a fuel cell, it is necessary to determine the amount of power generation by the fuel cell according to the amount of power generation by a solar cell and command the fuel cell to generate the determined amount of power. At that time, an operation that does not suppress solar power generation as much as possible is economically reasonable. As described above, in the multiple battery control, it is necessary to suppress the solar power generation in order to avoid the reverse power flow, but it is also required to avoid excessive suppression of the solar power generation at the same time.

For example, Patent Literature 1 describes that the amount of power generation by a renewable energy power generation facility and power demand required by a load are predicted, and a margin is given to a prediction value for the power demand. Then, it is described that an upper limit value $Xt$ of the amount of power generation is calculated based on a prediction value $Dt^*$ for the power demand, a margin $Mt$, and a prediction value $Pt^*$ for the amount of power generation from the renewable energy power generation facility.

Specifically, it is described that the smaller the prediction value $Pt^*$ for the amount of power generation, the lower the risk of occurrence of the reverse power flow (index $RR$ of the risk becomes larger), and thus the margin $Mt$ is set to be small. Further, it is described that the upper limit value $Xt$ of the amount of power generation is calculated by subtracting the margin $Mt$ from the prediction value $Dt^*$ for the demand. Therefore, the lower the prediction value $Pt^*$ for the amount of power generation, the larger the upper limit value $Xt$ of the amount of power generation is set.

However, Patent Literature 1 does not consider adding a margin to the prediction value $Pt^*$ for the amount of power generation. Therefore, in a case where the prediction value $Pt^*$ for the amount of power generation is smaller than the amount of actual power generation, it is determined that the risk of occurrence of the reverse power flow is lower than the actual risk, and there is a possibility that the upper limit value $Xt$ of the amount of power generation is set to be larger than the upper limit value to be originally set. In this case, there is a possibility that the amount of power generation is not suppressed and the reverse power flow occurs.

Accordingly, the present inventor conducted intensive studies on a technique capable of implementing multiple battery control in which reverse power flow does not occur, and consequently conceived the respective aspects of the present disclosure described below.

(1) A control method according to one aspect of the present disclosure is a control method in a control device that controls supply of power to a load, the control method including acquiring a lower limit value as a confidence interval of a prediction value for power demand by the load, acquiring an upper limit value as a confidence interval of a prediction value for solar power generation by a solar cell, planning an output of at least one battery of a fuel cell or a storage battery that supplies power corresponding to a difference between the lower limit value and the upper limit value to the load, and controlling an output of the at least one battery according to the plan.

The power corresponding to the difference between the lower limit value as the confidence interval of the prediction value of the power demand and the upper limit value as the confidence interval of the prediction value of the solar power generation indicates the power predicted to be required to be supplied to the load at the minimum. In this configuration, the output of at least one of the fuel cell and the storage battery is planned so that the power predicted to need to be supplied to the load at the minimum is supplied to the load. Therefore, the minimum required power of the load can be covered by the power output from the at least one battery according to the plan.

Further, with this configuration, since it is not planned to cause the at least one battery to output power exceeding the minimum required power of the load, it is possible to avoid the storage battery from being charged by solar power generation exceeding the minimum required power of the load. Therefore, the outputs of the solar cell and the storage battery are prevented from exceeding the power demand. As a result, it is possible to implement power supply from the solar cell and the at least one battery to the load so that the reverse power flow does not occur.

(2) In the control method according to (1), when the upper limit value is larger than the lower limit value, in the plan, stop of output of the fuel cell may be planned, and charging of the storage battery by the solar power generation corresponding to a difference between the upper limit value and the lower limit value may be further planned, and in the controlling, an output of the solar cell may be further controlled according to the plan.

In this configuration, when the upper limit value as the confidence interval of the prediction value of solar power generation is larger than the lower limit value as the confidence interval of the prediction value of power demand, the storage battery is charged by solar power generation corresponding to the difference between the upper limit value and the lower limit value. Therefore, it is possible to reduce the possibility that the reverse power flow occurs due to the solar power generation.

(3) In the control method according to (2), in the planning, a remaining power amount of the storage battery may be further acquired, whether or not the storage battery is in a predetermined state close to a fully charged state may be further determined based on the remaining power amount, and suppression of the solar power generation may be further planned when it is determined that the storage battery is in the predetermined state, and in the controlling, output of the solar cell may be further controlled according to the plan when it is determined that the storage battery is in the predetermined state.

In this configuration, when the storage battery is charged by the solar power generation corresponding to the difference between the upper limit value and the lower limit value, the solar power generation is suppressed when the storage battery enters a predetermined state close to a fully charged state. Therefore, it is possible to reduce the possibility that the reverse power flow occurs due to the continuation of the solar power generation even after the storage battery is fully charged.

(4) In the control method according to any one of (1) to (3), when power corresponding to a difference between the lower limit value and the upper limit value is larger than a sum of rated outputs of the fuel cell and the storage battery, in the planning, purchase of deficient power, which is power corresponding to the difference between a difference between the lower limit value and the upper limit value and the sum, from a power system may be further planned, and in the controlling, the deficient power purchased from the power system may be supplied to the load according to the plan.

Further, since a considerable control delay occurs in the output of the power of fuel cell and storage battery, it is difficult to obtain the rated outputs of fuel cell and storage battery at a desired timing. However, with this configuration, when the power corresponding to the difference between the lower limit value and the upper limit value is larger than the sum of the rated outputs of the fuel cell and the storage battery, the deficient power that cannot be supplied to the load only by the solar cell, the fuel cell, and the storage battery can be purchased from the power system, and the deficient power can be appropriately supplied to the load.

(5) In the control method according to (1), in the planning, output of the fuel cell and output of the storage battery may be planned in such a manner that a frequency of an output variation of the fuel cell is lower than a frequency of an output variation of the storage battery.

In this configuration, the outputs of the fuel cell and the storage battery are planned in such a manner that the frequency of the output variation of the fuel cell is lower than the frequency of the output variation of the storage battery. Therefore, considering that the life of the fuel cell becomes shorter as the frequency of the output variation of the fuel cell becomes higher, it is possible to plan the outputs of the fuel cell and the storage battery so as to extend the life of the fuel cell.

(6) In the control method according to (1), in the acquiring of the lower limit value, the power demand at a current time point may be predicted based on a past actual value of the power demand, a temporal transition of an actual prediction error may be acquired, the actual prediction error being a difference between the power demand predicted in past and an actual value of the power demand at a time of the prediction, a standard deviation of the actual prediction error may be calculated based on the temporal transition of the actual prediction error, and a result obtained by subtracting a product of the standard deviation of the actual prediction error and a predetermined coefficient from the power demand at the current time point may be acquired as the lower limit value.

With this configuration, the result obtained by subtracting the product of the standard deviation of the actual prediction error and the predetermined coefficient from the power demand at the current time point predicted based on the actual value of the past power demand can be appropriately acquired as the lower limit value as a confidence interval of the prediction value of the power demand.

(7) In the control method according to (1), in the acquiring of the lower limit value, the power demand at a current time

EP 4 765 552 A1

point may be predicted based on a past actual value of the power demand, an actual prediction error at the current time point may be estimated by inputting one or more feature amounts corresponding to the current time point into a learned model that has machine-learned a relationship between the actual prediction error that is a difference between the power demand predicted in past and an actual value of the power demand at a time of the prediction and the one or more feature amounts corresponding to the time of the prediction, and a result obtained by subtracting a product of an estimated value of the actual prediction error at the current time point and a predetermined coefficient from the power demand at the current time point may be acquired as the lower limit value.

With this configuration, it is possible to appropriately acquire, as the lower limit value as the confidence interval of the prediction value of the power demand, the result obtained by subtracting the product of the actual prediction error at the current time point estimated by inputting one or more feature amounts corresponding to the current time point into the learned model and the predetermined coefficient from the power demand at the current time point predicted based on the past actual value of the power demand.

(8) In the control method according to (7), the one or more feature amounts corresponding to the current time point and the time of the prediction may include at least one of a day of the week corresponding to the current time point and the time of the prediction, information indicating whether or not the current time point and the time of the prediction are on operating days of a facility in which the load is installed, information indicating a temperature and a production plan at the current time point and the time of the prediction in the facility, or information indicating whether or not the production plan at the current time point and the time of the prediction in the facility is set.

With this configuration, at least one of the day of the week corresponding to the current time point, information indicating whether or not the current time point is an operating day of the facility, information indicating a current temperature and a current production plan of the facility, or information indicating whether or not a current production plan of the facility is set is input into the learned model, whereby the actual prediction error at the current time point can be appropriately estimated.

(9) In the control method according to (1), in the acquiring of the upper limit value, the solar power generation at a current time point may be predicted based on a past actual value of the solar power generation, a temporal transition of an actual prediction error that is a difference between the solar power generation predicted in past and an actual value of the solar power generation at a time of the prediction may be acquired, a standard deviation of the actual prediction error may be calculated based on a temporal transition of the actual prediction error, and a sum of the solar power generation at the current time point and a product of the standard deviation of the actual prediction error and a predetermined coefficient may be acquired as the upper limit value.

With this configuration, the sum of the solar power generation at the current time point predicted based on the past actual value of the solar power generation and the product of the standard deviation of the actual prediction error and the predetermined coefficient can be appropriately acquired as the upper limit value as the confidence interval of the prediction value of the solar power generation.

(10) In the control method according to (1), in the acquiring of the upper limit value, the solar power generation at a current time point may be predicted based on a past actual value of the solar power generation, an actual prediction error at the current time point may be estimated by inputting one or more feature amounts corresponding to the current time point into a learned model that has machine-learned a relationship between the actual prediction error that is a difference between the solar power generation predicted in past and an actual value of the solar power generation at a time of the prediction and the one or more feature amounts corresponding to the time of the prediction, and a sum of the solar power generation at the current time point and a product of an estimated value of the actual prediction error at the current time point and a predetermined coefficient may be acquired as the upper limit value.

With this configuration, the sum of the product of the actual prediction error at the current time point estimated by inputting one or more feature amounts corresponding to the current time point into the learned model and the predetermined coefficient and the solar power generation at the current time point predicted based on the past actual value of the solar power generation can be appropriately acquired as the upper limit value as the confidence interval of the prediction value of the solar power generation.

(11) In the control method according to (10), the one or more feature amounts corresponding to the current time point and the time of the prediction may include at least one of a precipitation probability, a solar radiation amount, a wind speed, a wind direction, or an entire sky image corresponding to the current time point and the time of the prediction.

With this configuration, at least one of the precipitation probability, the solar radiation amount, the wind speed, the wind direction, and the entire sky image corresponding to the current time point is input into the learned model, whereby the actual prediction error at the current time point can be appropriately estimated.

(12) In the control method according to any one of (6) to (11), the predetermined coefficient may be set to be larger as a regulation for determining whether or not power supply to a power system is occurring in a facility in which the load is installed is stricter.

In this configuration, the predetermined coefficient is set to be larger as the regulation for determining whether or not the reverse power flow, which is the supply of power to the power system in the facility in which the load is installed, is more strict. Therefore, as the regulation is stricter, the lower limit value as the confidence interval of the prediction value of the power demand becomes smaller, and the upper limit value as the confidence interval of the prediction value of the solar power generation becomes larger.

Thus, in this configuration, it is possible to reduce the power that corresponds to the difference between the lower limit value and the upper limit value and that is predicted to be required to be supplied to the load at the minimum. As a result, when the power demand exceeds the lower limit value and when the solar power generation falls below the upper limit value, the more strict the regulation is, the larger the power supplied to the load by the system power becomes. Therefore, with this configuration, the occurrence of the reverse power flow in the facility can be appropriately avoided according to the strictness of the regulation.

(13) In the control method according to any one of (6) to (11), the predetermined coefficient may be set to be larger as a control delay time generated in the controlling in which the control device causes the storage battery to output power is longer.

In this configuration, the predetermined coefficient is set to be larger as the control delay time generated in the controlling in which the control device causes the storage battery to output power is longer. Therefore, as the control delay time is longer, the lower limit value as the confidence interval of the prediction value of the power demand is smaller, and the upper limit value as the confidence interval of the prediction value of the solar power generation is larger.

Thus, in this configuration, it is possible to reduce the power that corresponds to the difference between the lower limit value and the upper limit value and that is predicted to be required to be supplied to the load at the minimum. As a result, when the power demand exceeds the lower limit value and when the solar power generation falls below the upper limit value, the longer the control delay time, the larger the power supplied to the load by the system power. Therefore, with this configuration, the occurrence of the reverse power flow in the facility can be appropriately avoided according to the length of the control delay time.

(14) A control device according to another aspect of the present disclosure is a control device that controls supply of power to a load, the control device including a first acquisition unit that acquires a lower limit value as a confidence interval of a prediction value for power demand by the load, a second acquisition unit that acquires an upper limit value as a confidence interval of a prediction value for solar power generation by a solar cell, a planning unit that plans an output of at least one battery of a fuel cell or a storage battery that supplies power corresponding to a difference between the lower limit value and the upper limit value to the load, and an output control unit that controls an output of the at least one battery according to the plan.

With this configuration, the same operation and effect as those of the control method described in (1) can be obtained.

(15) A program according to still another aspect of the present disclosure is a program of a control device that controls supply of power to a load, the program causing the control device to execute processing including acquiring a lower limit value as a confidence interval of a prediction value for power demand by the load, acquiring an upper limit value as a confidence interval of a prediction value for solar power generation by a solar cell, planning an output of at least one battery of a fuel cell or a storage battery that supplies power corresponding to a difference between the lower limit value and the upper limit value to the load, and controlling an output of the at least one battery according to the plan.

With this configuration, the same operation and effect as those of the control method described in (1) can be obtained.

The present disclosure can also be implemented as a control system that operates using such a program. It is needless to say that such a computer program can be distributed via a computer-readable non-transitory recording medium such as a CD-ROM or via a communication network such as the Internet.

Note that all embodiments described below show specific examples of the present disclosure. Numerical values, shapes, constituents, steps, order of steps, and the like described in the embodiments below are merely examples, and are not intended to limit the present disclosure. Further, a constituent element not described in an independent claim representing a highest concept among constituent elements in the embodiments below is described as an optional constituent element. In all the embodiments, respective contents can be combined.

(First embodiment)

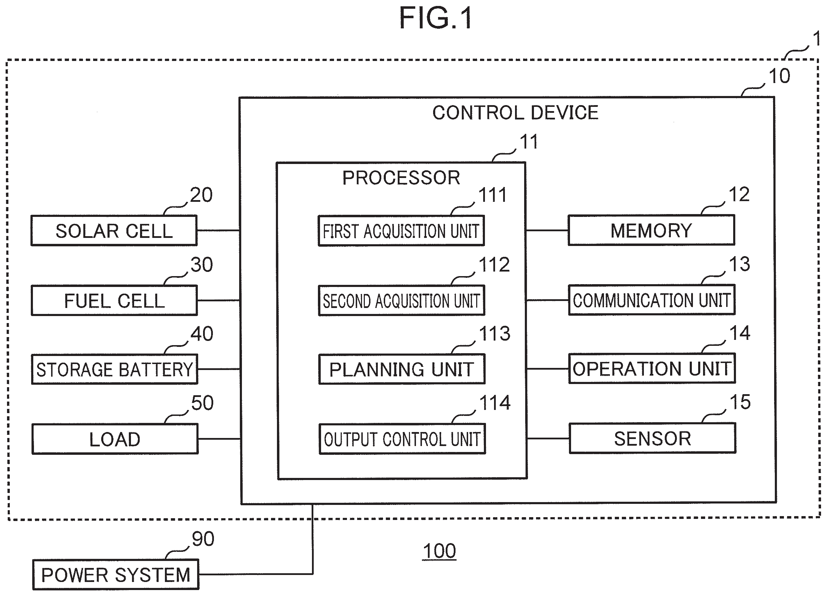

Hereinafter, a configuration of a control system 100 according to an embodiment of the present disclosure will be described. FIG. 1 is a diagram illustrating an example of a configuration of the control system 100. The control system 100 includes a solar cell 20, a fuel cell 30, a storage battery 40, a load 50, and a control device 10 installed in the facility 1, and a power system 90 that supplies system power to the facility 1. The facility 1 is, for example, a factory, a plant, and a house. The solar cell 20, the fuel cell 30, the storage battery 40, the power system 90, and the control device 10 are connected by a feeder line (not illustrated). Note that, although one solar cell 20, one fuel cell 30, one storage battery 40, and one load 50 are illustrated in FIG. 1, a plurality of these components may be provided.

The solar cell 20 supplies electric power (hereinafter, solar power generation) generated using sunlight to the load 50 or the storage battery 40 under the control of the control device 10.

The fuel cell 30 supplies power generated using fuel such as methanol or hydrogen to the load 50 under the control of the control device 10.

The storage battery 40 is a chargeable and dischargeable secondary battery such as a lithium ion battery or a nickel hydrogen battery. The storage battery 40 is charged by solar power generation and system power purchased from the power system 90 under the control of the control device 10. Further, the storage battery 40 supplies (discharges) the power charged in the storage battery 40 to the load 50 under the control of the control device 10.

The load 50 is an electric device that operates with power supplied from the solar cell 20, the fuel cell 30, the storage battery 40, and/or the power system 90. The load 50 includes, for example, an information processing device such as a personal computer, a manufacturing robot, an air conditioner, and the like.

The control device 10 controls power supply from the solar cell 20, the fuel cell 30, the storage battery 40, and the power system 90 to the load 50. Further, the control device 10 controls charging of the storage battery 40 by solar power generation and system power purchased from the power system 90.

Specifically, the control device 10 includes a memory 12, a communication unit 13, an operation unit 14, a sensor 15, and a processor 11.

The memory 12 includes, for example, a nonvolatile rewritable semiconductor memory such as a flash memory, a hard disk drive (HDD), or the like. The memory 12 stores a control program executed by the processor 11. The memory 12 stores various types of information related to processing executed by the processor 11.

For example, the memory 12 stores identification information of an area where the control device 10 is installed, a full charge capacity of the storage battery 40, and rated outputs of the fuel cell 30 and the storage battery 40.

In a case where the facility 1 is a factory or a plant, information indicating whether each day is an operating day is stored in the memory 12 on a daily basis. In a case where the facility 1 is a factory or a plant, information indicating a production plan in the facility 1 may be stored in the memory 12. The production plan includes, on a daily basis, the number of production lines in each of a plurality of time zones, the number of workers working in each production line, the number of air-conditioning facilities and lighting units to be operated in each production line, and the like.

The communication unit 13 is, for example, a communication circuit for performing communication between an external device connected via a network (not illustrated) such as the Internet and the control device 10.

The operation unit 14 receives various operations of the control device 10 by the user. The operation unit 14 includes, for example, a display that displays various information, a touch panel device that receives various operations, and the like.

The sensor 15 includes a sensor that measures power supplied from each of the fuel cell 30, the storage battery 40, and the power system 90 to the load 50, a sensor that measures a remaining power amount of the storage battery 40, a sensor that measures solar power generation, and a sensor that measures power charged from the power system 90 to the storage battery 40. The sensor 15 outputs various measurement values to the processor 11.

The processor 11 includes, for example, a central processing unit. The processor 11 functions as a first acquisition unit 111, a second acquisition unit 112, a planning unit 113, and an output control unit 114 by executing a control program stored in the memory 12. However, this is an example, and the first acquisition unit 111, the second acquisition unit 112, the planning unit 113, and the output control unit 114 may be implemented by a dedicated electric circuit such as an ASIC.

The first acquisition unit 111 controls the communication unit 13 to communicate with a weather information providing server (not illustrated) periodically (for example, every 30 minutes or 1 hour), thereby acquiring weather information of an area where the control device 10 is installed from the weather information providing server. Note that when communicating with the weather information providing server, the first acquisition unit 111 transmits identification information of an area where the control device 10 is installed to the weather information providing server.

The weather information of the area includes at least one of the weather (sunshine, rain, cloudiness, or the like), the temperature, the precipitation probability, the solar radiation amount, the wind speed, the wind direction, or the entire sky image of the area. The first acquisition unit 111 stores the acquired weather information in the memory 12 as weather information of an area where the control device 10 is installed at the current time point.

Further, the first acquisition unit 111 acquires a measurement value of the power supplied from the sensor 15 to the load 50 periodically (for example, every 5 minutes). The first acquisition unit 111 sets the measurement value as the actual value of the power demand by the load 50, and stores the current date and time and the actual value in the memory 12 in association with each other.

In addition, the first acquisition unit 111 predicts the power demand by the load 50 at the current time point periodically (for example, every 30 minutes or 1 hour). The first acquisition unit 111 stores the current date and time and the prediction value for the power demand by the load 50 at the current time point in the memory 12 in association with each other.

Specifically, the memory 12 stores a learned model (hereinafter, the first prediction model) that has machine-learned a relationship between a measurement date and time of power supplied to the load 50 by the sensor 15, a measurement value of power supplied to the load 50 at the measurement date and time, and information (feature amount information) corresponding to the measurement date and time.

The feature amount information corresponding to the measurement date and time includes at least one of a day of the week corresponding to the measurement date and time, information indicating whether the measurement date and time is an operating day of the facility 1, information indicating a temperature and a production plan of the measurement date and time in the facility 1, or information indicating whether a production plan of the measurement date and time in the facility 1 is set. Setting the production plan for the measurement date and time in the facility 1 indicates that the production plan for the measurement date and time is stored in the memory 12.

When the date and time and the feature amount information corresponding to the date and time are input, the first prediction model outputs a prediction value for power demand by the load 50 at the date and time. The first acquisition unit 111 refers to the information stored in the memory 12 and inputs the current date and time and the feature amount information corresponding to the current date and time into the first prediction model, thereby predicting the prediction value for the power demand output by the first prediction model as the power demand by the load 50 at the current time point.

Note that the first prediction model may be obtained by machine learning of the relationship between the measurement time of the power supplied to the load 50 by the sensor 15 and the measurement value of the power supplied to the load 50 at the measurement time. In this case, when the time is input, the first prediction model outputs a prediction value for the power demand by the load 50 at the time. Therefore, by inputting the current time into the first prediction model, the first acquisition unit 111 may predict the prediction value for the power demand output by the first prediction model as the power demand by the load 50 at the current time point.

In addition, the first acquisition unit 111 may predict the average value of the actual values of the power demand by the load 50 associated with the same time as the current time in the past as the power demand by the load 50 at the current time point. Here, the same time as the current time indicates a time within a predetermined error range (for example, 5 minutes) from the current time.

Furthermore, the first acquisition unit 111 periodically (for example, every 30 minutes or 1 hour) acquires the lower limit value (hereinafter, lower limit prediction value for power demand) as the confidence interval of the prediction value for the power demand by the load 50. The confidence interval of the prediction value for the power demand by the load 50 is a range of the power demand in which it can be assured that the prediction value is the actual value of the power demand by the load 50. Details of a method of acquiring the lower limit prediction value for the power demand by the first acquisition unit 111 will be described later.

The second acquisition unit 112 acquires a measurement value of power generated by the solar cell 20 from the sensor 15 periodically (for example, every 5 minutes). The second acquisition unit 112 sets the acquired measurement value as the actual value of the solar power generation by the solar cell 20, refers to the information stored in the memory 12, and stores the current date and time, the weather information of the area where the control device 10 is installed at the current time point, and the actual value in the memory 12 in association with each other.

Further, the second acquisition unit 112 predicts solar power generation by the solar cell 20 at the current time point periodically (for example, every 30 minutes or 1 hour). The second acquisition unit 112 refers to the information stored in the memory 12, and stores the current date and time, the weather information of the area where the control device 10 is installed at the current time point, and the prediction value for solar power generation by the solar cell 20 at the current time point in the memory 12 in association with each other.

Specifically, the memory 12 stores a learned model (hereinafter, the second prediction model) that has machine-learned the relationship among the measurement time of the electric power generated by the solar cell 20 by the sensor 15, the weather information corresponding to the measurement time, and the measurement value of the solar power generation at the measurement time.

When the time and weather information corresponding to the time are input, the second prediction model outputs a prediction value for solar power generation by the solar cell 20 at the time. The second acquisition unit 112 refers to the information stored in the memory 12, and inputs the current time and the weather information of the area where the control device 10 is installed at the current time point into the second prediction model, thereby predicting the prediction value for solar power generation output by the second prediction model as solar power generation by the solar cell 20 at the current time point.

Note that the second acquisition unit 112 may predict the average value of the actual values of solar power generation by the solar cell 20 associated with the weather information including the same weather as the weather information of the area where the control device 10 is installed at the current time point as the solar power generation by the solar cell 20 at the current time point.

Further, the second acquisition unit 112 periodically (for example, every 30 minutes or 1 hour) acquires the upper limit value (hereinafter, upper limit prediction value for solar power generation) as the confidence interval of the prediction value for solar power generation by the solar cell 20. The confidence interval of the prediction value for solar power generation by the solar cell 20 is a range of solar power generation in which it can be certain that the prediction value is an actual value of solar power generation by the solar cell 20. Details of a method of acquiring the upper limit prediction value for the solar power generation by the second acquisition unit 112 will be described later.

The planning unit 113 plans to supply power from each of the solar cell 20, the fuel cell 30, the storage battery 40, and the power system 90 to the load 50 periodically (for example, every 30 minutes or 1 hour). Details of a method of planning by the planning unit 113 will be described later.

The output control unit 114 controls the output of power by each of the solar cell 20, the fuel cell 30, the storage battery 40, and the power system 90 according to the plan prepared by the planning unit 113.

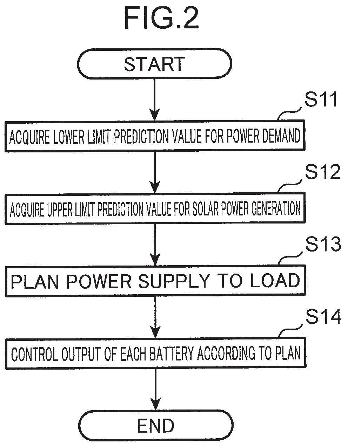

The above is the configuration of the control device 10. Subsequently, processing performed by the control device 10 will be described. FIG. 2 is a flowchart illustrating an example of the processing of the control device 10. The processor 11 executes the processing illustrated in FIG. 2 periodically (for example, every 30 minutes or 1 hour).

In step S11, the first acquisition unit 111 acquires a lower limit prediction value that is a lower limit value as a confidence interval of the prediction value for the power demand by the load 50.

In step S12, the second acquisition unit 112 acquires the upper limit prediction value that is the upper limit value as the confidence interval of the prediction value for solar power generation by the solar cell 20.

In step S13, the planning unit 113 prepares a plan to supply power from each of the solar cell 20, the fuel cell 30, the storage battery 40, and the power system 90 to the load 50.

In step S14, the output control unit 114 controls the output of power by each of the solar cell 20, the fuel cell 30, the storage battery 40, and the power system 90 according to the plan prepared in step S13. Then, the processor 11 ends the process illustrated in FIG. 2.

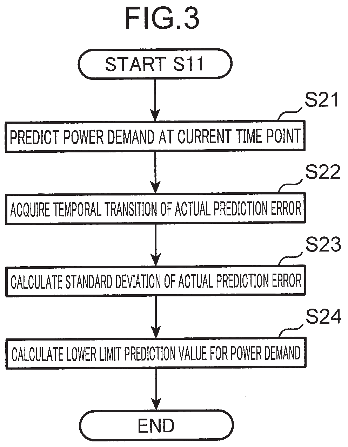

Next, details of processing in which the first acquisition unit 111 acquires the lower limit prediction value that is the lower limit value as the confidence interval of the prediction value for the power demand by the load 50 in step S11 (FIG. 2) will be described. FIG. 3 is a flowchart illustrating an example of processing of acquiring a lower limit value as a confidence interval of a prediction value for the power demand.

When step S11 (FIG. 2) is started, in step S21, the first acquisition unit 111 predicts the power demand by the load 50 at the current time point as described above.

In step S22, the first acquisition unit 111 acquires a temporal transition of an actual prediction error that is the difference between the power demand by the load 50 predicted in the past and the actual value of the power demand by the load 50 at the time of the prediction.

Specifically, the first acquisition unit 111 refers to the memory 12, and acquires, for a plurality of actual values of past power demand, the absolute value of the difference between the prediction value for the power demand associated with the date and time (for example, August 1, 10:00) closest to the date and time (for example, August 1, 10:05) associated with each actual value and each actual value as the actual prediction error at the date and time (for example, August 1, 10:00) associated with each actual value.

Note that the first acquisition unit 111 may acquire, for the date and time (for example, August 1, 10:05) associated with each actual value, the absolute value of the difference between an average value of a prediction value for power demand associated with the closest past date and time (for example, August 1, 10:00) and a prediction value for power demand associated with the closest future date and time (for example, August 1, 10:30) and each actual value, as the actual prediction error at the date and time (for example, August 1, 10:00) associated with each actual value.

In step S23, the first acquisition unit 111 calculates a standard deviation of the actual prediction error based on the temporal transition of the actual prediction error acquired in step S22.

Specifically, for the actual prediction errors at the plurality of dates and times acquired in step S22, the first acquisition unit 111 calculates an average value of the actual prediction errors at one or more dates and times (for example, July 31, 10:00 and August 1, 10:00) indicating the same time (for example, 10:00) in chronological order. The first acquisition unit 111 sets the calculated average value group of the actual prediction errors as a population, and calculates the standard deviation of the average value group as the standard deviation of the actual prediction errors. The one or more dates and times indicating the same time indicate one or more dates and times indicating one or more times matching within a predetermined error range.

In step S24, the first acquisition unit 111 calculates a lower limit prediction value for the power demand based on the power demand by the load 50 at the current time point predicted in step S21 and the standard deviation of the actual prediction error calculated in step S23. Then, the first acquisition unit 111 ends step S11 (FIG. 2).

Specifically, in step S24, the first acquisition unit 111 calculates a result obtained by subtracting a product (standard deviation of actual prediction errors $\times$ predetermined coefficient) $\Delta DM$ of the standard deviation of the actual prediction errors calculated in step S23 and a predetermined coefficient (for example, 2) from the power demand $DM_{center}$ by the load 50 at the current time point predicted in step S21 as a lower limit prediction value $DM_{min}$ for the power demand by the load 50 as expressed in the following Formula (1).

[Math. 1]

$$DM_{min} = DM_{center} - \Delta DM \quad \cdots (1)$$

Note that the predetermined coefficient is not limited to a constant, and may be set to be larger, for example, as a regulation for determining whether or not a reverse power flow, which is the supply of power to the power system 90, has occurred in the facility 1 is stricter.

Specifically, the processor 11 determines that a reverse power flow has occurred when the time during which the power equal to or greater than a predetermined threshold is continuously supplied to the power system 90 is equal to or longer than a predetermined specified time. In this case, the smaller the predetermined threshold and the shorter the predetermined specified time, the stricter the regulations for determining whether a reverse power flow, which is the supply of power to the power system 90, has occurred. Therefore, the predetermined coefficient may be set larger as the predetermined threshold is smaller. In addition, the predetermined coefficient may be set larger as the predetermined specified time is shorter.

In addition, the predetermined coefficient may be set to be larger as the control delay time generated in the controlling in which the control device 10 causes the storage battery 40 to output power is longer.

Specifically, when the processor 11 performs control to cause the storage battery 40 to output the instructed power, it takes not a little time for the processor 11 to create a control signal indicating an instruction of the control to the storage battery 40 and transmit the control signal to the storage battery 40. Further, the storage battery 40 requires a considerable rise time to stably output the power instructed by the control signal.

As described above, a considerable control delay occurs in the controlling in which the control device 10 causes the storage battery 40 to output power. Accordingly, the time from when the processor 11 starts to create the control signal indicating the instruction of the control to the storage battery 40 until the storage battery 40 stably outputs the instructed power may be set as the control delay time generated in the controlling in which the control device 10 causes the storage battery 40 to output the power, and may be determined based on the experimental value. Then, the predetermined coefficient may be set larger as the control delay time is longer.

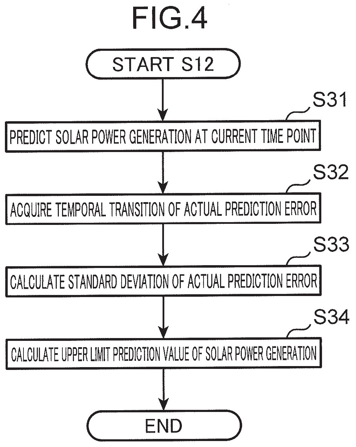

Next, details of the process in which the second acquisition unit 112 acquires the upper limit prediction value that is the upper limit value as the confidence interval of the prediction value for solar power generation by the solar cell 20 in step S12 (FIG. 2) will be described. FIG. 4 is a flowchart illustrating an example of processing of acquiring an upper limit value as a confidence interval of a prediction value for solar power generation.

When step S12 (FIG. 2) is started, in step S31, the second acquisition unit 112 predicts solar power generation by the solar cell 20 at the current time point as described above.

In step S32, the second acquisition unit 112 acquires the temporal transition of an actual prediction error that is the difference between the solar power generation by the solar cell 20 predicted in the past and the actual value of the solar power generation by the solar cell 20 at the time of the prediction.

Specifically, the second acquisition unit 112 refers to the memory 12, and acquires, for a plurality of actual values of past solar power generation, the absolute value of the difference between the prediction value for the solar power generation associated with the date and time (for example, August 1, 10:00) closest to the date and time (for example, August 1, 10:05) associated with each actual value and each actual value as the actual prediction error at the date and time (for example, August 1, 10:00) associated with each actual value.

Note that the second acquisition unit 112 may acquire, for the date and time (for example, August 1, 10:05) associated with each actual value, the absolute value of the difference between an average value of a prediction value for solar power generation associated with the closest past date and time (for example, August 1, 10:00) and a prediction value for solar power generation associated with the closest future date and time (for example, August 1, 10:30) and each actual value as the actual prediction error at the date and time (for example, August 1, 10:00) associated with each actual value.

In step S33, the second acquisition unit 112 calculates the standard deviation of the actual prediction errors based on the temporal transition of the actual prediction errors acquired in step S32.

Specifically, for the actual prediction errors at the plurality of dates and times acquired in step S32, the second acquisition unit 112 calculates an average value of the actual prediction errors at one or more dates and times (for example, 10:00, July 31, 10:00, August 1) indicating the same time (for example, 10:00) in chronological order. The second acquisition unit 112 sets the calculated average value group of the actual prediction errors as a population, and calculates the standard deviation of the average value group as the standard deviation of the actual prediction errors.

In step S34, the second acquisition unit 112 calculates the upper limit prediction value for the solar power generation based on the solar power generation by the solar cell 20 at the current time point predicted in step S31 and the standard deviation of the actual prediction errors calculated in step S33, and ends step S12 (FIG. 2).

Specifically, in step S34, the second acquisition unit 112 calculates, as the upper limit prediction value $PV_{max}$ for the solar power generation, the sum of the solar power generation $PV_{center}$ by the solar cell 20 at the current time point predicted in step S31 and the product (standard deviation of actual prediction errors $\times$ predetermined coefficient) $\Delta PV$ of

the standard deviation of the actual prediction errors calculated in step S33 and a predetermined coefficient (for example, 2) as expressed in the following Formula (2).
[Math. 2]

$$PV_{max} = PV_{center} + \Delta PV \quad \cdots (2)$$

Note that the predetermined coefficient used in step S34 is not limited to a constant similarly to the predetermined coefficient used in step S24 (FIG. 3). Similarly to the predetermined coefficient used in step S24 (FIG. 3), the predetermined coefficient used in step S34 may be set to be larger as the regulation for determining whether the reverse power flow in the facility 1 has occurred is stricter. Similarly to the predetermined coefficient used in step S24 (FIG. 3), the predetermined coefficient used in step S34 may be set larger as a control delay time generated in the controlling in which the control device 10 causes the storage battery 40 to output power is longer.

Next, details of a process in which the planning unit 113 prepares a plan to supply power from the solar cell 20, the fuel cell 30, the storage battery 40, and the power system 90 to the load 50 in step S13 (FIG. 2) will be described.

In step S13 (FIG. 2), the planning unit 113 plans the output of the fuel cell 30 and the output of the storage battery 40 that supply power corresponding to a difference between the lower limit prediction value $DM_{min}$ for the power demand and the upper limit prediction value $PV_{max}$ for the solar power generation to the load 50.

Specifically, the upper limit prediction value $PV_{max}$ of solar power generation may be larger than the lower limit prediction value $DM_{min}$ of power demand. In this case, the planning unit 113 plans to stop the output of the fuel cell 30, and further plans to charge the storage battery 40 by solar power generation corresponding to the difference between the upper limit prediction value $PV_{max}$ and the lower limit prediction value $DM_{min}$.

When the upper limit prediction value $PV_{max}$ of the solar power generation is larger than the lower limit prediction value $DM_{min}$ of the power demand, the planning unit 113 further acquires the remaining power amount of the storage battery 40 measured by the sensor 15. The planning unit 113 determines whether or not the storage battery 40 is in a predetermined state close to a fully charged state depending on whether or not the remaining power amount is less than the predetermined threshold.

Note that the planning unit 113 may determine whether the storage battery 40 is in a predetermined state close to the fully charged state by another method based on the remaining power amount of the storage battery 40 measured by the sensor 15. When determining that the storage battery 40 is in the predetermined state close to the fully charged state, the planning unit 113 further plans suppression of solar power generation.

Further, the power corresponding to the difference between lower limit prediction value $DM_{min}$ for the power demand and upper limit prediction value $PV_{max}$ for the solar power generation may be larger than the sum of the rated outputs of fuel cell 30 and storage battery 40. In this case, the planning unit 113 plans to purchase, from the power system 90, power (deficient power) corresponding to a difference between power corresponding to a difference between the lower limit prediction value $DM_{min}$ for the power demand and the upper limit prediction value $PV_{max}$ for the solar power generation, and the sum of the rated outputs of the fuel cell 30 and the storage battery 40.

Further, planning unit 113 plans the output of fuel cell 30 and the output of storage battery 40 such that the frequency of the output variation of fuel cell 30 becomes lower than the frequency of the output variation of storage battery 40. The frequency of the output variation indicates the number of times the difference between the previous output value and the current output value is equal to or larger than a predetermined value per predetermined period.

Step S13 (FIG. 2) can be implemented, for example, as follows. The planning unit 113 acquires the remaining power amount of the storage battery 40 measured by the sensor 15, and determines whether or not the storage battery 40 is in a predetermined state close to a fully charged state depending on whether or not the remaining power amount is less than the predetermined threshold.

When the planning unit 113 determines that the storage battery 40 is in the predetermined state close to the fully charged state, the upper limit value $PV_{limit}$ of the solar power generation, the output FC of the fuel cell 30, the output SB of the storage battery 40, and the purchased power Grid from the power system 90 are calculated by a known mathematical optimization method so as to satisfy the constraint condition shown in the following Formula (3) including the lower limit prediction value $DM_{min}$ for the power demand and the upper limit prediction value $PV_{max}$ for the solar power generation and the objective function shown in the following 1) to 4).
[Math. 3]

$$DM_{min} - \min(PV_{max}, PV_{limit}) = FC + SB + Grid \quad \cdots (3)$$

The objective function includes 1) setting the output FC of the fuel cell 30 to a value equal to or larger than 0 in which the number of changes equal to or larger than a predetermined value from the previously calculated output FC is as small as possible, and 2) setting the upper limit value $PV_{limit}$ of the solar power generation to a value equal to or larger than 0 as large as possible. Further, the objective function includes 3) setting the purchased power Grid from the power system 90 to a value equal to or larger than 0 as small as possible, and 4) setting the absolute value of the output SB of the storage battery 40 to a value equal to or less than the full charge capacity of the storage battery 40.

When the planning unit 113 determines that the storage battery 40 is not in the predetermined state close to the fully charged state, the output FC of the fuel cell 30, the output SB of the storage battery 40, and the purchased power Grid from the power system 90 are calculated so as to satisfy the constraint condition represented by the following Formula (4) in which the upper limit value $PV_{limit}$ of the solar power generation is omitted from the above Formula (3) and the objective function shown in the above 1), 3), and 4).

[Math. 4]

$$DM_{min} - PV_{max} = FC + SB + Grid \quad \cdots (4)$$

In this case, the output SB of the storage battery 40 is calculated so as to satisfy the control condition shown in the above Formula (3) or (4) and further satisfy the objective function shown in 4). On the other hand, the output FC of the fuel cell 30 is calculated so as to satisfy the control condition expressed by the above Formula (3) or (4) and further satisfy the objective function expressed by 1). Therefore, output FC of fuel cell 30 is calculated to be lower than the output variation of output SB of storage battery 40.

When the solar power generation by the solar cell 20 measured by the sensor 15 at the current time point is larger than the calculated upper limit value $PV_{limit}$ of the solar power generation, the planning unit 113 plans to suppress (reduce) the power output from the solar cell 20 to the power corresponding to the upper limit value $PV_{limit}$. Therefore, it is possible to reduce the possibility that the reverse power flow occurs due to the continuation of the solar power generation even after the storage battery 40 is fully charged.

When the calculated output FC of fuel cell 30 is 0, planning unit 113 plans to stop the output of fuel cell 30. When the calculated output FC of fuel cell 30 is a positive value, planning unit 113 plans to supply power corresponding to the value of the output FC from fuel cell 30 to load 50.

When the calculated output SB of the storage battery 40 is a positive value, the planning unit 113 plans to supply power corresponding to the value of the output SB from the storage battery 40 to the load 50. On the other hand, when the calculated output SB of the storage battery 40 is a negative value, the planning unit 113 plans to charge the storage battery 40 with power corresponding to the absolute value of the output SB generated by the solar cell 20.

When the calculated purchased power Grid from the power system 90 is 0, the planning unit 113 plans to stop the purchase of power from the power system 90. When the calculated purchased power Grid from the power system 90 has a positive value, the planning unit 113 plans to purchase power corresponding to the value of the purchased power Grid from the power system 90 and supply the power to the load 50.

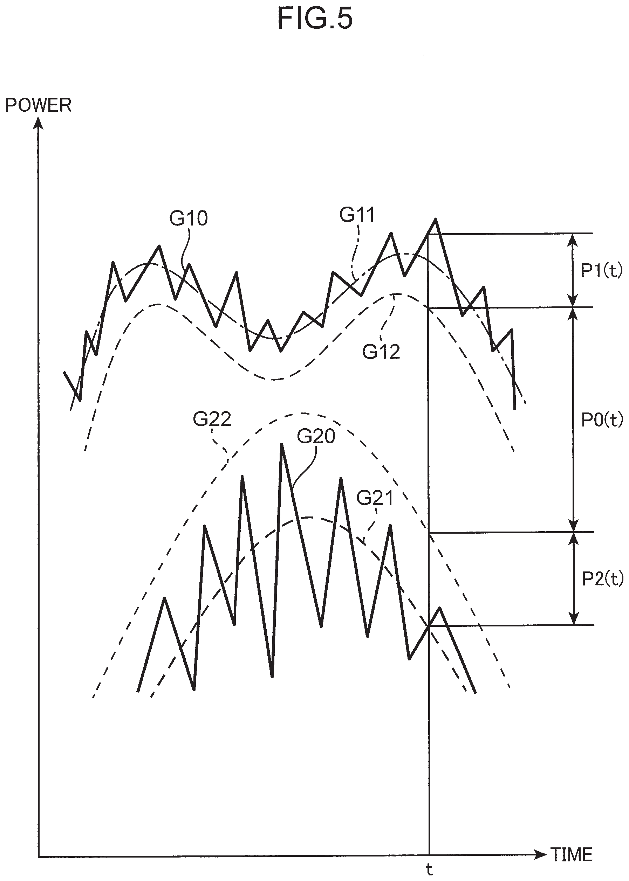

FIG. 5 is a diagram illustrating an example of a plan prepared when the planning unit 113 determines that the lower limit prediction value $DM_{min}$ of the power demand is larger than the upper limit prediction value $PV_{max}$ of the solar power generation and the storage battery 40 is not in the predetermined state close to the fully charged state.

The horizontal axis in FIG. 5 represents time, and the vertical axis in FIG. 5 represents a power value. Graph G10 illustrates an example of temporal transition of the actual value of the power demand by the load 50. Graph G11 illustrates an example of temporal transition of the prediction value for the power demand by the load 50. Graph G12 illustrates an example of temporal transition of the lower limit prediction value $DM_{min}$ for the power demand. Graph G20 illustrates an example of temporal transition of the actual value of the solar power generation. Graph G21 illustrates an example of temporal transition of the prediction value for the solar power generation. Graph G22 illustrates an example of temporal transition of the upper limit prediction value $PV_{max}$ for the solar power generation.

For example, when the process illustrated in FIG. 2 is performed at time t, the lower limit prediction value $DM_{min}$ of the power demand is larger than the upper limit prediction value $PV_{max}$ of the solar power generation, and thus the power corresponding to the difference P0 (t) between the lower limit prediction value $DM_{min}$ of the power demand and the upper limit prediction value $PV_{max}$ of the solar power generation corresponding to the left side of Formula (4) is a positive value. Therefore, in step S13 (FIG. 2), the planning unit 113 calculates at least one of the output FC of the fuel cell 30 and the output SB of the storage battery 40 as a positive value, and plans to supply power from the at least one to the load 50.

Therefore, when the actual value of the power demand exceeds the lower limit prediction value $DM_{min}$, the system power corresponding to the difference P1 (t) between the actual value of the power demand and the lower limit prediction value $DM_{min}$ is purchased from the power system 90. Further, when the actual value of the solar power generation falls below the upper limit prediction value $PV_{max}$, system power corresponding to the difference P2 (t) between the actual value of the solar power generation and the upper limit prediction value $PV_{max}$ is purchased from the power system 90.

As a result, it is possible to plan to supply, from at least one of the fuel cell 30 and the storage battery 40 to the load 50, power that is predicted to be required to be supplied at the minimum to the load 50 and corresponds to the difference P0 (t) between the lower limit prediction value $DM_{min}$ for the power demand and the upper limit prediction value $PV_{max}$ for the solar power generation. Therefore, the minimum necessary power of the load 50 can be covered by the power output from the fuel cell 30 and the storage battery 40 according to the plan.

In addition, since it is not planned to cause the storage battery 40 to output power exceeding the minimum required power of the load 50, it is possible to avoid the storage battery 40 from being charged by the solar power generation exceeding the minimum required power of the load 50. Therefore, it is avoided that the outputs of the solar cell 20 and the storage battery 40 exceed the power demand by the load 50. As a result, the power supply from the solar cell 20, the fuel cell 30, and the storage battery 40 to the load 50 can be implemented so that the reverse power flow does not occur.

On the other hand, when the upper limit prediction value $PV_{max}$ of the solar power generation is larger than the lower limit prediction value $DM_{min}$ of the power demand and the storage battery 40 is not in the predetermined state close to the fully charged state, the power corresponding to the left side of Formula (4) becomes a negative value. Thus, the planning unit 113 plans to calculate the output FC of the fuel cell 30 as 0 and the output SB of the storage battery 40 as a negative value, stop the output of the fuel cell 30, and charge the storage battery 40 with power corresponding to the absolute value of the output SB generated by the solar cell 20. Therefore, it is possible to reduce the possibility that the reverse power flow occurs due to the solar power generation.

In addition, since a considerable control delay occurs in the output of the power of fuel cell 30 and storage battery 40, it is difficult to obtain the rated outputs of fuel cell 30 and storage battery 40 at a desired timing. However, with this configuration, when the power corresponding to the difference between the lower limit prediction value $DM_{min}$ for the power demand and the upper limit prediction value $PV_{max}$ for the solar power generation is larger than the sum of the rated outputs of the fuel cell 30 and the storage battery 40, the purchased power Grid from the power system 90 becomes a positive value. Therefore, the planning unit 113 plans to purchase power corresponding to the value of the purchased power Grid from the power system 90 and supply the power to the load 50. Therefore, power that cannot be supplied to the load 50 only by the solar cell 20, the fuel cell 30, and the storage battery 40 can be purchased from the power system 90 and appropriately supplied to the load 50.

Note that in step S11 (FIG. 2), the first acquisition unit 111 may calculate a different lower limit prediction value for the power demand depending on whether the current time point is an operating day. In this case, it is possible to more accurately calculate a lower limit prediction value for different power demand depending on whether or not the current time point is an operating day.

Specifically, in a case where the current time point is the operating day, in step S22 (FIG. 3), the first acquisition unit 111 may acquire the temporal transition of the actual prediction error that is the difference between the power demand by the load 50 predicted on the past operating day and the actual value of the power demand by the load 50 at the time of the prediction. On the other hand, in a case where the current time point is a non-operating day that is not an operating day, in step S22 (FIG. 3), the first acquisition unit 111 may acquire the temporal transition of the actual prediction error that is the difference between the power demand by the load 50 predicted on the past non-operating day and the actual value of the power demand by the load 50 at the time of the prediction.

Similarly, in step S12 (FIG. 2), the second acquisition unit 112 may calculate different upper limit prediction values of the solar power generation according to the precipitation probability at the current time point. In this case, it is possible to more accurately calculate different upper limit prediction values of the solar power generation according to the precipitation probability at the current time point.

Specifically, in a case where the precipitation probability at the current time point is less than 10%, in step S32 (FIG. 4), the second acquisition unit 112 may acquire the temporal transition of the actual prediction error that is the difference between the power demand by the load 50 predicted on the date and time when the precipitation probability in the past is less than 10% and the actual value of the power demand by the load 50 at the time of the prediction.

Similarly, the precipitation probability at the current time point may be classified in increments of 10%, and in step S32 (FIG. 4), the second acquisition unit 112 may acquire the temporal transition of the actual prediction error that is the difference between the power demand by the load 50 predicted on the date and time of the precipitation probability (for example, 10% or more and less than 20%) of the same classification as the precipitation probability (for example, 15%) at the current time point in the past and the actual value of the power demand by the load 50 at the time of the prediction.

(Second embodiment)

In the first embodiment, an example has been described in which, in step S11 (FIG. 2), the first acquisition unit 111 performs the processing shown in FIG. 3, calculates the standard deviation of the actual prediction errors, which is the difference between the power demand predicted in the past and the actual value of the power demand at the time of the prediction, and acquires the lower limit prediction value for the power demand.

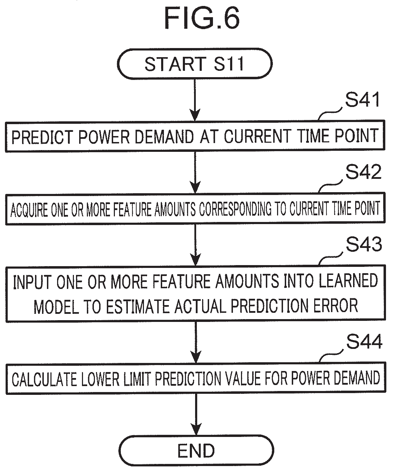

In a second embodiment, an example in which the first acquisition unit 111 performs processing illustrated in FIG. 6 in step S11 (FIG. 2) and acquires a lower limit prediction value for power demand using a learned model will be described. FIG. 6 is a flowchart illustrating another example of processing of acquiring a lower limit value as a confidence interval of a prediction value for the power demand.

In the second embodiment, the memory 12 stores a learned model (hereinafter, the first estimation model) that has machine-learned a relationship between a difference between the power demand by the load 50 predicted in the past by the first acquisition unit 111 and the actual value of the power demand at the time of the prediction and the predetermined one or more feature amounts corresponding to the time of the prediction.

Hereinafter, the difference between the power demand by the load 50 predicted in the past by the first acquisition unit 111 and the actual value of the power demand at the time of the prediction is referred to as a first actual prediction error (actual prediction error). When the one or more feature amounts corresponding to the current time point are input, the first estimation model outputs an estimated value of the first actual prediction error at the current time point.

The predetermined one or more feature amounts corresponding to the time of prediction include at least one of the day of the week corresponding to the time of prediction, information indicating whether or not the time of prediction is an operating day of the facility 1, information indicating the temperature and the production plan at the time of prediction in the facility 1, or information indicating whether or not the production plan at the time of prediction in the facility 1 is set. Setting the production plan at the time of prediction in the facility 1 indicates that the production plan at the time of prediction is stored in the memory 12.

Similarly, the one or more feature amounts corresponding to the current time point include at least one of the day of the week corresponding to the current time point, information indicating whether or not the current time point is an operating day of the facility 1, information indicating a current temperature and a current production plan of the facility 1, or information indicating whether or not a current production plan of the facility 1 is set. Setting the production plan at the current time point in the facility 1 indicates that the production plan at the current time point is stored in the memory 12.

Specifically, for a plurality of past prediction values of the power demand in the facility 1, the absolute value of the difference between the actual value of the power demand associated with the date and time (for example, August 1, 10:00) closest to the date and time (for example, August 1, 10:00) associated with each prediction value and each prediction value is calculated as the first actual prediction error at the date and time (for example, August 1, 10:00) associated with each prediction value.

Note that the first estimation model may be generated by the processor 11 in the control device 10, or may be generated by an information processing device other than the control device 10 using the prediction values and the actual values of the plurality of past power demands in the facility 1 stored in the memory 12 of the control device 10.

As shown in FIG. 6, when step S11 (FIG. 2) is started, in step S41, the first acquisition unit 111 predicts the power demand by the load 50 at the current time point, similarly to step S21 (FIG. 3).

In step S42, the first acquisition unit 111 refers to the memory 12 and acquires the one or more feature amounts corresponding to the current time point.

In step S43, the first acquisition unit 111 inputs the one or more feature amounts corresponding to the current time point acquired in step S42 into the first estimation model to estimate the first actual prediction error at the current time point. Specifically, the first acquisition unit 111 acquires the estimated value of the first actual prediction error output by the first estimation model by inputting the one or more feature amounts corresponding to the current time point acquired in step S42 into the first estimation model.

In step S44, the first acquisition unit 111 calculates, as a lower limit prediction value for the power demand, a result obtained by subtracting a product (= estimated value of first actual prediction error × predetermined coefficient) of the estimated value of the first actual prediction error estimated in step S43 and a predetermined coefficient (for example, 2) from the power demand by the load 50 at the current time point predicted in step S41.

According to the second embodiment, at least one of the day of the week corresponding to the current time point, information indicating whether or not the current time point is an operating day of the facility 1, information indicating a current temperature and a current production plan of the facility 1, or information indicating whether or not a current production plan of the facility 1 is set is input into the first estimation model, whereby the first actual prediction error at the current time point can be appropriately estimated. Therefore, the lower limit value as the confidence interval of the prediction value for the power demand can be appropriately calculated using the first actual prediction error at the current time point.

(Third embodiment)

In the first embodiment, an example has been described in which, in step S12 (FIG. 2), the second acquisition unit 112 performs the processing illustrated in FIG. 4, calculates the standard deviation of the actual prediction errors, which is the difference between the solar power generation predicted in the past and the actual value of the solar power generation at the time of the prediction, and acquires the upper limit prediction value for the solar power generation.

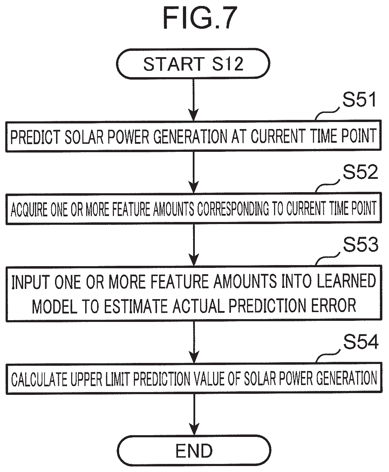

In the third embodiment, an example in which the second acquisition unit 112 performs processing illustrated in FIG. 7 in step S12 (FIG. 2) and acquires an upper limit prediction value for solar power generation using a learned model will be described. FIG. 7 is a flowchart illustrating another example of processing of acquiring an upper limit value as a confidence interval of a prediction value for the solar power generation.

In the third embodiment, the memory 12 stores a learned model (hereinafter, the second estimation model) that has machine-learned the relationship between the difference between the solar power generation by the solar cell 20 predicted in the past by the second acquisition unit 112 and the actual value of the solar power generation at the time of the prediction and the predetermined one or more feature amounts corresponding to the time of the prediction.

Hereinafter, the difference between the solar power generation by the solar cell 20 predicted in the past by the second acquisition unit 112 and the actual value of the solar power generation at the time of the prediction is referred to as a second actual prediction error (actual prediction error). When the one or more feature amounts corresponding to the current time point are input, the second estimation model outputs an estimated value of the second actual prediction error at the current time point.

The predetermined one or more feature amounts corresponding to the time of prediction include at least one of a precipitation probability corresponding to the time of prediction, a solar radiation amount, a wind speed, a wind direction, and an entire sky image of the area. Similarly, the one or more feature amounts corresponding to the current time point include at least one of a precipitation probability corresponding to the current time point, a solar radiation amount, a wind speed, a wind direction, and an entire sky image of the area.

Specifically, for a plurality of past prediction values of the solar power generation in the facility 1, the absolute value of the difference between the actual value of the solar power generation associated with the date and time (for example, August 1, 10:00) closest to the date and time (for example, August 1, 10:00) associated with each prediction value and each prediction value is calculated as the second actual prediction error at the date and time (for example, August 1, 10:00) associated with each prediction value. The second estimation model is generated by performing machine learning on the relationship between the second actual prediction error at the date and time associated with each prediction value and the predetermined one or more feature amounts corresponding to the date and time for a plurality of past prediction values of the solar power generation in the facility 1.

Note that the second estimation model may be generated by the processor 11 in the control device 10, or may be generated by an information processing device other than the control device 10 using a plurality of prediction values and actual values of past solar power generation in the facility 1 stored in the memory 12 of the control device 10.

As shown in FIG. 7, when step S12 (FIG. 2) is started, in step S51, the second acquisition unit 112 predicts the solar power generation by the solar cell 20 at the current time point, similarly to step S31 (FIG. 4).

In step S52, the second acquisition unit 112 refers to the memory 12 and acquires the one or more feature amounts corresponding to the current time point.

In step S53, the second acquisition unit 112 inputs the one or more feature amounts corresponding to the current time point acquired in step S52 into the second estimation model to estimate the second actual prediction error at the current time point. Specifically, the second acquisition unit 112 acquires the estimated value of the second actual prediction error output by the second estimation model by inputting the one or more feature amounts corresponding to the current time point acquired in step S52 into the second estimation model.

In step S54, the second acquisition unit 112 calculates the sum of the solar power generation by the solar cell 20 at the current time point predicted in step S51 and the product of the estimated value of the second actual prediction error estimated in step S53 and a predetermined coefficient (for example, 2) (= estimated value of second actual prediction error $\times$ predetermined coefficient) as the upper limit prediction value for the solar power generation.

According to the third embodiment, at least one of the precipitation probability, the solar radiation amount, the wind speed, the wind direction, and the entire sky image corresponding to the current time point is input into the second estimation model, whereby the second actual prediction error at the current time point can be appropriately estimated. Therefore, the upper limit value as the confidence interval of the prediction value for the solar power generation can be appropriately calculated using the second actual prediction error at the current time point.

Note that in the first to third embodiments, control system 100 (FIG. 1) may not include fuel cell 30. Accordingly, in step S13 (FIG. 2), the planning unit 113 may plan the output of the storage battery 40 for supplying power corresponding to the difference between the lower limit prediction value $DM_{min}$ for the power demand and the upper limit prediction value $PV_{max}$ for the solar power generation to the load 50.

Specifically, when the planning unit 113 determines that the storage battery 40 is in the predetermined state close to the fully charged state, the upper limit value $PV_{limit}$ of the solar power generation, the output SB of the storage battery 40, and the purchased power Grid from the power system 90 may be calculated so as to satisfy the constraint condition in which the term of the output FC of the fuel cell 30 is deleted from the constraint condition shown in the above Formula (3) and the objective functions shown in the above 2) to 4). When the planning unit 113 determines that the storage battery 40 is not in the predetermined state close to the fully charged state, the upper limit value $PV_{limit}$ of the solar power generation, the output SB of the storage battery 40, and the purchased power Grid from the power system 90 may be calculated so as to satisfy the constraint condition in which the term of the output FC of the fuel cell 30 is deleted from the constraint condition shown in the above Formula (4) and the objective functions shown in the above 2) to 4).

Alternatively, in the first to third embodiments, the storage battery 40 may not be included in the control system 100 (FIG. 1). Accordingly, in step S13 (FIG. 2), the planning unit 113 may plan the output of the fuel cell 30 that supplies power corresponding to the difference between the lower limit prediction value $DM_{min}$ for the power demand and the upper limit prediction value $PV_{max}$ for the solar power generation to the load 50.

Specifically, when the control system 100 (FIG. 1) does not include the storage battery 40, the surplus power cannot be charged in the storage battery 40 similarly to the case where the storage battery 40 is in the predetermined state close to the fully charged state. Therefore, the planning unit 113 may calculate the upper limit value $PV_{limit}$ of the solar power generation, the output FC of the fuel cell 30, and the purchased power Grid from the power system 90 so as to satisfy the constraint condition obtained by deleting the term of the output SB of the storage battery 40 from the constraint condition shown in the above Formula (3) and the objective functions shown in the above 1) to 3).

According to the present disclosure, it is possible to implement power supply from a solar cell, a fuel cell, and a storage battery to a load in which a reverse power flow does not occur, which is useful in realizing self-sufficiency of power in a facility such as a factory.

**Claims**

1. A control method in a control device that controls supply of power to a load, the control method comprising:

   acquiring a lower limit value as a confidence interval of a prediction value for power demand by the load;
   acquiring an upper limit value as a confidence interval of a prediction value for solar power generation by a solar cell;
   planning an output of at least one battery of a fuel cell or a storage battery that supplies power corresponding to a difference between the lower limit value and the upper limit value to the load; and
   controlling an output of the at least one battery according to the plan.

2. The control method according to claim 1, wherein

   when the upper limit value is larger than the lower limit value,
   in the plan, stop of output of the fuel cell is planned, and charging of the storage battery by the solar power generation corresponding to a difference between the upper limit value and the lower limit value is further planned, and
   in the controlling, an output of the solar cell is further controlled according to the plan.

3. The control method according to claim 2, wherein

   in the planning,
   a remaining power amount of the storage battery is further acquired,
   whether or not the storage battery is in a predetermined state close to a fully charged state is further determined based on the remaining power amount, and
   suppression of the solar power generation is further planned when it is determined that the storage battery is in the predetermined state, and
   in the controlling,
   output of the solar cell is further controlled according to the plan when it is determined that the storage battery is in the predetermined state.

4. The control method according to any one of claims 1 to 3, wherein

   when power corresponding to a difference between the lower limit value and the upper limit value is larger than a sum of rated outputs of the fuel cell and the storage battery,
   in the planning, purchase of deficient power, which is power corresponding to a difference between the difference between the lower limit value and the upper limit value and the sum, from a power system is further planned, and
   in the controlling, the deficient power purchased from the power system is supplied to the load according to the plan.

5. The control method according to claim 1, wherein

   in the planning,
   output of the fuel cell and output of the storage battery are planned in such a manner that a frequency of an output variation of the fuel cell is lower than a frequency of an output variation of the storage battery.

6. The control method according to claim 1, wherein

in the acquiring of the lower limit value,
the power demand at a current time point is predicted based on a past actual value of the power demand,
a temporal transition of an actual prediction error is acquired, the actual prediction error being a difference between the power demand predicted in past and an actual value of the power demand at a time of the prediction,
a standard deviation of the actual prediction error is calculated based on the temporal transition of the actual prediction error, and
a result obtained by subtracting a product of the standard deviation of the actual prediction error and a predetermined coefficient from the power demand at the current time point is acquired as the lower limit value.

7. The control method according to claim 1, wherein

in the acquiring of the lower limit value,
the power demand at a current time point is predicted based on a past actual value of the power demand,
an actual prediction error at the current time point is estimated by inputting one or more feature amounts corresponding to the current time point into a learned model that has machine-learned a relationship between the actual prediction error that is a difference between the power demand predicted in past and an actual value of the power demand at a time of the prediction and the one or more feature amounts corresponding to the time of the prediction, and
a result obtained by subtracting a product of an estimated value of the actual prediction error at the current time point and a predetermined coefficient from the power demand at the current time point is acquired as the lower limit value.

8. The control method according to claim 7, wherein
the one or more feature amounts corresponding to the current time point and the time of the prediction include at least one of a day of the week corresponding to the current time point and the time of the prediction, information indicating whether or not the current time point and the time of the prediction are on operating days of a facility in which the load is installed, information indicating a temperature and a production plan at the current time point and the time of the prediction in the facility, or information indicating whether or not the production plan at the current time point and the time of the prediction in the facility is set.

9. The control method according to claim 1, wherein

in the acquiring of the upper limit value,
the solar power generation at a current time point is predicted based on a past actual value of the solar power generation,
a temporal transition of an actual prediction error that is a difference between the solar power generation predicted in past and an actual value of the solar power generation at a time of the prediction is acquired,
a standard deviation of the actual prediction error is calculated based on a temporal transition of the actual prediction error, and
a sum of the solar power generation at the current time point and a product of the standard deviation of the actual prediction error and a predetermined coefficient is acquired as the upper limit value.

10. The control method according to claim 1, wherein

in the acquiring of the upper limit value,
the solar power generation at a current time point is predicted based on a past actual value of the solar power generation,
an actual prediction error at the current time point is estimated by inputting one or more feature amounts corresponding to the current time point into a learned model that has machine-learned a relationship between the actual prediction error that is a difference between the solar power generation predicted in past and an actual value of the solar power generation at a time of the prediction and the one or more feature amounts corresponding to the time of the prediction, and
a sum of the solar power generation at the current time point and a product of an estimated value of the actual prediction error at the current time point and a predetermined coefficient is acquired as the upper limit value.

**11.** The control method according to claim 10, wherein
the one or more feature amounts corresponding to the current time point and the time of the prediction include at least one of a precipitation probability, a solar radiation amount, a wind speed, a wind direction, or an entire sky image corresponding to the current time point and the time of the prediction.

**12.** The control method according to any one of claims 6 to 11, wherein
the predetermined coefficient is set to be larger as a regulation for determining whether or not power supply to a power system is occurring in a facility in which the load is installed is stricter.

**13.** The control method according to any one of claims 6 to 11, wherein
the predetermined coefficient is set to be larger as a control delay time generated in the controlling in which the control device causes the storage battery to output power is longer.

**14.** A control device that controls supply of power to a load, the control device comprising:

a first acquisition unit that acquires a lower limit value as a confidence interval of a prediction value for power demand by the load;
a second acquisition unit that acquires an upper limit value as a confidence interval of a prediction value for solar power generation by a solar cell;
a planning unit that plans an output of at least one battery of a fuel cell or a storage battery that supplies power corresponding to a difference between the lower limit value and the upper limit value to the load; and
an output control unit that controls an output of the at least one battery according to the plan.

**15.** A program of a control device that controls supply of power to a load, the program causing the control device to execute processing comprising:

acquiring a lower limit value as a confidence interval of a prediction value for power demand by the load;
acquiring an upper limit value as a confidence interval of a prediction value for solar power generation by a solar cell;
planning an output of at least one battery of a fuel cell or a storage battery that supplies power corresponding to a difference between the lower limit value and the upper limit value to the load; and
controlling an output of the at least one battery according to the plan.

# FIG.1

CONTROL DEVICE 10

PROCESSOR 11

FIRST ACQUISITION UNIT 111

SECOND ACQUISITION UNIT 112

PLANNING UNIT 113

OUTPUT CONTROL UNIT 114

SOLAR CELL 20

FUEL CELL 30

STORAGE BATTERY 40

LOAD 50

MEMORY 12

COMMUNICATION UNIT 13

OPERATION UNIT 14

SENSOR 15

POWER SYSTEM 90

100

EP 4 765 552 A1

# FIG.2

START

S11
ACQUIRE LOWER LIMIT PREDICTION VALUE FOR POWER DEMAND

S12
ACQUIRE UPPER LIMIT PREDICTION VALUE FOR SOLAR POWER GENERATION

S13
PLAN POWER SUPPLY TO LOAD

S14
CONTROL OUTPUT OF EACH BATTERY ACCORDING TO PLAN

END

# FIG.3

START S11

PREDICT POWER DEMAND AT CURRENT TIME POINT — S21

ACQUIRE TEMPORAL TRANSITION OF ACTUAL PREDICTION ERROR — S22

CALCULATE STANDARD DEVIATION OF ACTUAL PREDICTION ERROR — S23

CALCULATE LOWER LIMIT PREDICTION VALUE FOR POWER DEMAND — S24

END

# FIG.4

START S12

PREDICT SOLAR POWER GENERATION AT CURRENT TIME POINT — S31

ACQUIRE TEMPORAL TRANSITION OF ACTUAL PREDICTION ERROR — S32

CALCULATE STANDARD DEVIATION OF ACTUAL PREDICTION ERROR — S33

CALCULATE UPPER LIMIT PREDICTION VALUE OF SOLAR POWER GENERATION — S34

END

# FIG.5

# FIG.6

START S11

S41

PREDICT POWER DEMAND AT CURRENT TIME POINT

S42

ACQUIRE ONE OR MORE FEATURE AMOUNTS CORRESPONDING TO CURRENT TIME POINT

S43

INPUT ONE OR MORE FEATURE AMOUNTS INTO LEARNED MODEL TO ESTIMATE ACTUAL PREDICTION ERROR

S44

CALCULATE LOWER LIMIT PREDICTION VALUE FOR POWER DEMAND

END

# FIG.7

START S12

S51
PREDICT SOLAR POWER GENERATION AT CURRENT TIME POINT

S52
ACQUIRE ONE OR MORE FEATURE AMOUNTS CORRESPONDING TO CURRENT TIME POINT

S53
INPUT ONE OR MORE FEATURE AMOUNTS INTO LEARNED MODEL TO ESTIMATE ACTUAL PREDICTION ERROR

S54
CALCULATE UPPER LIMIT PREDICTION VALUE OF SOLAR POWER GENERATION

END

## INTERNATIONAL SEARCH REPORT

| International application No. |
| --- |
| **PCT/JP2024/033772** |

### A. CLASSIFICATION OF SUBJECT MATTER

*H02J 3/46*(2006.01)i; *H02J 3/00*(2006.01)i; *H02J 3/32*(2006.01)i; *H02J 3/38*(2006.01)i; *H02J 7/35*(2006.01)i
FI: H02J3/46; H02J3/00 130; H02J3/32; H02J3/38 130; H02J3/38 170; H02J7/35 K

According to International Patent Classification (IPC) or to both national classification and IPC

### B. FIELDS SEARCHED

Minimum documentation searched (classification system followed by classification symbols)

H02J3/46; H02J3/00; H02J3/32; H02J3/38; H02J7/35

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2021-027800 A (LAPLACE SYSTEM CO., LTD.) 22 February 2021 (2021-02-22) entire text, all drawings | 1-15 |
| A | JP 2021-052488 A (YAMABISHI CORP.) 01 April 2021 (2021-04-01) entire text, all drawings | 1-15 |
| A | JP 2021-083267 A (HITACHI, LTD.) 27 May 2021 (2021-05-27) entire text, all drawings | 1-15 |
| A | JP 2020-182333 A (IHI CORP.) 05 November 2020 (2020-11-05) entire text, all drawings | 1-15 |

☐ Further documents are listed in the continuation of Box C.    ☑ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **21 October 2024** | **12 November 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/033772**

| Patent document cited in search report | | | Publication date (day/month/year) | Patent family member(s) | Publication date (day/month/year) |
|---|---|---|---|---|---|
| JP | 2021-027800 | A | 22 February 2021 | (Family: none) | |
| JP | 2021-052488 | A | 01 April 2021 | (Family: none) | |
| JP | 2021-083267 | A | 27 May 2021 | (Family: none) | |
| JP | 2020-182333 | A | 05 November 2020 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022025698 A